# EUROPÄISCHE PATENTSCHRIFT

(11) **EP 2 982 572 B1**
(45) Veröffentlichungstag und Bekanntmachung des Hinweises auf die Patenterteilung: **12.09.2018**
(21) Anmeldenummer: 15177810.7
(22) Anmeldetag: 22.07.2015
(51) Int. Cl.: B62D 15/02, G08G 1/16

(54) **VERFAHREN ZUM UNTERSTÜTZEN EINES FAHRERS EINES KRAFTFAHRZEUGS BEIM AUSPARKEN, FAHRERASSISTENZSYSTEM UND KRAFTFAHRZEUG**
METHOD FOR ASSISTING A DRIVER OF A MOTOR VEHICLE WHEN DRIVING OUT OF A PARKING SPACE, DRIVER ASSISTANCE SYSTEM, AND MOTOR VEHICLE
PROCÉDÉ D'ASSISTANCE D'UN CONDUCTEUR DE VÉHICULE AUTOMOBILE LORS DU STATIONNEMENT, SYSTÈME D'ASSISTANCE DE CONDUCTEUR ET VÉHICULE AUTOMOBILE

(30) Priorität: 04.08.2014 DE 102014111012
(43) Veröffentlichungstag der Anmeldung: 10.02.2016
(73) Patentinhaber: Valeo Schalter und Sensoren GmbH, 74321 Bietigheim-Bissingen (DE)
(72) Erfinder: Blinkle, Frank, 74321 Bietigheim-Bissingen (DE)

(56) Entgegenhaltungen:
- EP-A1- 2 340 980
- DE-A1-102006 004 866
- JP-A- 2007 320 433
- US-A1- 2008 009 990
- US-A1- 2010 060 486

## Beschreibung

Die Erfindung betrifft ein Verfahren zum Unterstützen eines Fahrers eines Kraftfahrzeugs beim Ausparken aus einer Parkfläche. Es wird zumindest ein Bild von einem Umgebungsbereich des Kraftfahrzeugs mittels einer Kamera des Kraftfahrzeugs bereitgestellt und es wird zumindest ein die Parkfläche begrenzendes Begrenzungselement anhand des Bildes mittels einer Auswerteeinrichtung des Kraftfahrzeugs ermittelt. Die Erfindung betrifft außerdem ein Fahrerassistenzsystem für ein Kraftfahrzeug sowie ein Kraftfahrzeug mit einem Fahrerassistenzsystem.

Verfahren zum Unterstützen eines Fahrers eines Kraftfahrzeugs beim Ausparken aus einer Parkfläche sind aus dem Stand der Technik bekannt. So beschreibt die DE 10 2008 025 219 A1 ein Verfahren zum Unterstützen des Fahrers beim Ausparken aus einer seitlichen Parklücke. Hierzu wird die Länge der Parklücke vermessen und eine Ausparktrajektorie anhand der durch die Vermessung gewonnenen Daten ermittelt. Die Vermessung erfolgt mittels Ultraschallsensoren. Hierbei ist es zudem vorgesehen, dass ein Bordstein während des Ausparkvorgangs erkannt wird und die Ausparktrajektorie so korrigiert wird, dass ein Abfahren der Ausparktrajektorie frei von Kollisionen mit dem Bordstein erfolgt.

US 2008/009990 A1 ist als nächstliegender Stand der Technik nach dem Oberbegriff des Anspruchs 1 zu sehen und beschreibt ein Fahrassistenzsystem für ein Fahrzeug. Wenn ein Fahrzeug vorwärts bewegt wird um Einzuparken, wird ein entgegengesetzter Pfad während einer Periode des Einparkvorgangs im Speicher gespeichert. Das Fahrzeug wird vorwärts in einen Parkplatz eingeparkt, Beim Starten des Fahrzeugs auf dem Parkplatz wird ein Startschalter zur Unterstützung des Ausparkvorgangs eingeschaltet, um dadurch eine Steuereinheit zum Berechnen einer Bewegungsbahn zum rückwärts Rausfahren einzuschalten. Eine Anzeigevorrichtung zeigt die berechnete Trajektorie zum rückwärts rausfahren an.

Heutige Parkassistenten, die den Fahrer beim Einparken unterstützen, verwenden üblicherweise die Signale von Ultraschallsensoren. Hierbei besteht die Problematik, dass die Parklücken nur anhand von dreidimensionalen Objekten erkannt werden können. Dies gilt auch für das Ausparkmanöver. Je nach dem, wie die Objekte anordnet sind, ist nicht klar, wie das Kraftfahrzeug genau ausgeparkt werden soll, d. h. ob das Kraftfahrzeug in Querrichtung oder in Längsrichtung ausgeparkt werden soll. Weiterhin ist die Orientierung der Fahrbahn vor der Parklücke nicht eindeutig definiert.

Es ist Aufgabe der Erfindung, ein Verfahren, ein Fahrerassistenzsystem sowie ein Kraftfahrzeug bereitzustellen, bei denen Maßnahmen getroffen sind, die gewährleisten, dass der Fahrer des Kraftfahrzeugs beim Ausparken aus der Parkfläche besonders wirkungsvoll unterstützt wird.

Diese Aufgabe wird erfindungsgemäß durch ein Verfahren, durch ein Fahrerassistenzsystem sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche.

Ein erfindungsgemäßes Verfahren dient zum Unterstützen eines Fahrers eines Kraftfahrzeugs beim Ausparken aus einer Parkfläche. Es wird zumindest ein Bild von einem Umgebungsbereich des Kraftfahrzeugs mittels einer Kamera des Kraftfahrzeugs bereitgestellt und es wird zumindest ein die Parkfläche begrenzendes Begrenzungselement anhand des Bildes mittels einer Auswerteeinrichtung des Kraftfahrzeugs ermittelt. Erfindungsgemäß ist es vorgesehen, dass das zumindest eine ermittelte Begrenzungselement mit einem vorbestimmten Referenzbegrenzungselement mittels der Auswerteeinrichtung verglichen wird und ein zum Ausfahren des Kraftfahrzeugs aus der Parkfläche vorgesehener Ausfahrtbereich der Parkfläche anhand des Vergleichs mittels der Auswerteeinrichtung bestimmt wird.

Bei bekannten Verfahren zum Unterstützen des Fahrers des Kraftfahrzeugs beim Ausparken aus der Parkfläche, ist jedoch nicht beschrieben, wie der Ausfahrtbereich der Parkfläche bestimmt wird. So kann eine Parkfläche beispielsweise mehrere Möglichkeiten aufweisen, um von dieser auszuparken bzw. abzufahren, aber nur eine dieser Möglichkeiten ist bestimmungsgemäß oder vorschriftsmäßig vorgesehen.

Durch das erfindungsgemäße Verfahren wird es möglich, dass dem Fahrer der Ausfahrtbereich, also der Bereich, welcher vorschriftsmäßig für das Verlassen der Parkfläche vorgesehen ist, bestimmt wird. Falls der Fahrer also beispielsweise bei einer Parkfläche zum Querparken die Möglichkeit hat nach Vorne oder nach Hinten von der Parkfläche abzufahren, so ermöglicht das erfindungsgemäße Verfahren den Ausfahrtbereich der Parkfläche und unterstützt den Fahrer somit bei dem vorschriftsgemäßen Abfahren der Parkfläche zum Querparken. Bei anderen Parkflächen, wie beispielsweise einer Parkfläche zum Längsparken wird der Fahrer bei der Entscheidung unterstützt, ob Parkfläche zum Längsparken nach links oder rechts bzgl. der Fahrtrichtung verlassen bzw. abgefahren werden soll. Der Ausfahrtbereich der Parkfläche kann also der Bereich sein, welcher durch gesetzliche Bestimmungen, beispielsweise eine Straßenverkehrsordnung, zum Verlassen der Parkfläche vorgesehen sein kann. Dieser Ausfahrtbereich wird bestimmt, indem das zumindest eine ermittelte Begrenzungselement der Parkfläche mit einem vorbestimmten Referenzbegrenzungselement, welches beispielsweise in einer Datenbank gespeichert in einem Speicher der Auswerteeinrichtung vorliegt, verglichen wird. Der Vergleich wird mittels der Auswerteeinrichtung bzw. einer Bildverarbeitungseinrichtung durchgeführt.

Bevorzugt ist es vorgesehen, dass als das Begrenzungselement zumindest ein Bereich eines Bordsteins ermittelt wird. Es kann somit bereits mit dem Bereich, welcher ein Teil des Bordsteins sein kann, auf einen Bordstein als Begrenzungselement der Parkfläche geschlossen werden. Es kann nun davon ausgegangen werden, dass der Ausfahrtbereich der Parkfläche auf der dem Bordstein gegenüberliegenden Seite der Parkfläche angeordnet ist. Zumindest kann davon ausgegangen werden, dass die vorgesehene Ausfahrtrichtung bzw. der Ausfahrtbereich auf der gegenüberliegenden Seite des Bordsteins liegt. Somit kann der Ausfahrtbereich bei einer Parkfläche, die durch einen Bordstein begrenzt ist, zuverlässig ermittelt werden.

Erfindungsgemäß ist es vorgesehen, dass als das Begrenzungselement zumindest ein Bereich einer Parkflächenmarkierung ermittelt wird. Beispielsweise kann anhand des Bereichs der Parkflächenmarkierung festgestellt werden, um welche bestimmte Parkflächenmarkierung es sich handelt. Die Parkflächenmarkierung kann beispielsweise mittels einer Klassifikation bestimmt werden. Als Klassen können beispielsweise alle vorkommenden bzw. bekannten Parkflächenmarkierungen vorgesehen sein. Das Zuordnen zu diesen Klassen kann dann beispielsweise mittels der Auswerteeinrichtung, insbesondere durch Vergleichen des ermittelten Bereichs der Parkflächenmarkierung mit einem vorbestimmten Bereich einer Referenzparkflächenmarkierung erfolgen. Vorteilhaft ist also nun, dass anhand der erfassten Parkflächenmarkierung oder eines Bereichs davon der Ausfahrtbereich der Parkfläche bestimmt werden kann. Dies kann beispielsweise erfolgen, indem für die sämtlichen Referenzbegrenzungselemente bzw. die Referenzparkflächenmarkierungen bekannt ist, welchen Hinweis diese auf den Ausfahrtbereich der Parkfläche geben.

Erfindungsgemäß ist es vorgesehen, dass eine Form der Parkflächenmarkierung ermittelt wird und der Ausfahrtbereich abhängig von der Form der Parkflächenmarkierung bestimmt wird. Es kann also anhand der Form, also beispielsweise anhand eines Umrisses bzw. einer Kontur der Parkflächenmarkierung oder eines Bereichs der Parkflächenmarkierung, ermittelt werden, wo sich der Ausfahrtbereich der Parkfläche befindet. Vorteilhaft an der Erfassung der Form der Parkflächenmarkierung ist, dass diese meist eindeutig und/oder mit geringem Rechenaufwand durch ein Bildverarbeitungsverfahren bestimmt werden kann. Dies liegt zum Teil auch daran, dass viele Parkflächenmarkierungen weiß sind und auf einer dunklen Straßenfläche aufgebracht sind. Der Kontrast zwischen der Parkflächenmarkierung und der Straßenfläche ist somit besonders hoch.

Erfindungsgemäß ist es vorgesehen, dass als das Begrenzungselement ein T-förmiger Abschnitt der Parkflächenmarkierung ermittelt wird. Der T-förmige Abschnitt ist häufig bei Parkflächenmarkierungen von Parkflächen zum Querparken vorgesehen. Vorteilhaft an der Erfassung des T-förmigen Abschnitts ist, dass dieser besonders markant und/oder eindeutig ist. Der T-förmige Abschnitt ist somit besonders einfach mittels des Vergleichs mit einem vorbestimmten Referenzbegrenzungselement bzw. vorbestimmten T-förmigen Referenzabschnitt zu ermitteln. Bei dem Bestimmen der Ausfahrtfläche kann zudem berücksichtigt werden, dass der T-förmige Abschnitt üblicherweise an einem Ende der Parkflächenmarkierung angebracht bzw. vorgesehen ist.

Erfindungsgemäß ist es vorgesehen, dass als das Begrenzungselement ein kreuzförmiger Abschnitt der Parkflächenmarkierung ermittelt. Ein kreuzförmiger Abschnitt liegt beispielsweise vor, wenn sich zwei Linien der Parkflächenmarkierung schneiden. Diese können sich beispielsweise im rechten Winkel schneiden. Anhand des kreuzförmigen Abschnitts kann dann der Ausfahrtbereich der Parkfläche bestimmt werden. Vorteilhaft an der Erfassung des kreuzförmigen Abschnitts ist wiederum, dass dieser besonders markant und/oder eindeutig zu erkennen ist. Weiterhin kann bei dem kreuzförmigen Abschnitt davon ausgegangen werden, dass zu mindestens zwei Seiten der Parkfläche andere Parkflächen angrenzen und somit einen möglichen Ausfahrtbereich versperren.

Erfindungsgemäß wird der Ausfahrtbereich auf einer dem ermittelten T-förmigen Abschnitt zugeordneten Seite der Parkfläche bestimmt. Hier kann berücksichtigt werden, dass sich der T-förmige Abschnitt der Parkflächenmarkierung üblicherweise in dem Bereich der Parkfläche befindet, welcher zum Ausfahren vorgesehen ist. Wird die Parkfläche also beispielsweise in dem Fall einer Parkfläche zum Querparken zur linken und zur rechten Seite bzgl. der Längsachse des Kraftfahrzeugs beschränkt, so kann an den Enden der beschränkenden Parkflächenmarkierung jeweils ein T-förmiger Abschnitt vorhanden sein. Der Bereich zwischen den T-förmigen Abschnitten definiert dann den Ausfahrtbereich.

Erfindungsgemäß ist es vorgesehen, dass der Ausfahrtbereich auf einer dem ermittelten kreuzförmigen Abschnitt gegenüberliegenden Seite der Parkfläche bestimmt wird. Wenn ein kreuzförmiger Abschnitt der Parkflächenmarkierung erkannt wird, kann davon ausgegangen werden kann, dass der Ausfahrtbereich auf der gegenüberliegenden Seite des kreuzförmigen Abschnitts liegt. Der Grund hierfür ist, dass der kreuzförmige Abschnitt üblicherweise nur dann vorliegt, wenn weitere Parkflächen an die Parkfläche angrenzen, auf der sich das Kraftfahrzeug momentan befindet. Die Wahrscheinlichkeit, dass sich der Ausfahrtbereich nun auf der Seite des kreuzförmigen Abschnitts befindet, ist somit gering. In dem Fall, dass keine weiteren Parkflächen an die Parkfläche angrenzen, wird also folglich auch kein kreuzförmiger Abschnitt in der Parkflächenmarkierung vorliegen.

In einer weiteren Ausgestaltung ist es vorgesehen, dass die Parkfläche eine Schrägparkfläche ist und abhängig von dem ermittelten T-förmigen Abschnitt eine Fahrtrichtung einer an den Ausfahrtbereich angrenzenden Fahrspur bestimmt wird. Die Schrägparkfläche ist eine Parkfläche, auf welcher sich das Kraftfahrzeug in Schrägaufstellung befindet. Die Schrägaufstellung liegt beispielsweise vor, wenn der Aufstellwinkel zwischen 45° und 89°, insbesondere zwischen 45° und 80°, bezüglich der Fahrspur beträgt. Die Schrägaufstellung wird oft bei Parkflächen verwendet, um schmalere Fahrwege als bei Senkrechtaufstellung und bessere Platzausnutzung als bei Parallelaufstellung zu ermöglichen. Die Schrägaufstellung ist häufig nur bei entsprechender Parkflächemarkierung zulässig. Dabei kann die Schrägparkfläche derart ausgebildet sein, dass das Kraftfahrzeug zum Einparken vorwärts in die Parklücke bewegt wird und zum Ausparken rückwärts aus der Parklücke bewegt wird. In diesem Fall ist ein erster Winkel zwischen einer verlängerten Längsachse des Kraftfahrzeugs und einer Mittellinie der an die Schrägparkfläche angrenzenden Fahrbahn, der ausgehend von der verlängerten Längsachse im Gegenuhrzeigersinn gemessen wird, kleiner als 90°. Damit das Kraftfahrzeug entlang der Fahrtrichtung der Fahrspur bewegt werden kann, kann das Kraftfahrzeug beim Ausparken aus der Parklücke derart manövriert werden, dass es quasi um den ersten Winkel gedreht wird. Alternativ dazu kann die Schrägparkfläche derart ausgebildet sein, dass das Kraftfahrzeug zum Einparken rückwärts in die Parklücke bewegt wird und zum Ausparken vorwärts aus der Parklücke bewegt wird. In diesem Fall weist ist ein zweiter Winkel zwischen der verlängerten Längsachse und der Mittellinie, der ausgehend von der verlängerten Längsachse im Uhrzeigersinn gemessen wird, kleiner als 90°. In diesem Fall kann das Kraftfahrzeug beim Ausparken aus der Parklücke derart manövriert werden, dass das Kraftfahrzeug quasi um den zweiten Winkel gedreht wird. Somit kann das Kraftfahrzeug anschließend entlang der Fahrtrichtung der Fahrspur bewegt werden. Bei Schrägparkflächen ist der ermittelte T-förmige Abschnitt der Schrägparkfläche anders geformt als der T-förmige Abschnitt bei der Senkrechtparkfläche. So bilden die beiden Linien der Parkflächenmarkierung, welche das T des T-förmigen Abschnitts definieren einen Winkel abweichend von 90° zueinander. Auch in Fall einer Schrägparkfläche definiert der Bereich zwischen den T-förmigen Abschnitten der Parkflächenmarkierung den Ausfahrtbereich.

In einer bevorzugten Ausführungsform wird eine Mittellinie einer Fahrbahn ermittelt und abhängig von der erfassten Mittellinie eine Fahrtrichtung einer an den Ausfahrtbereich angrenzenden Fahrspur der Fahrbahn bestimmt. Es kann somit abhängig von der Mittellinie bestimmt werden, in welche Richtung sich die Fahrtrichtung der Fahrspur erstreckt. Vorteilhaft daran ist also, dass der Fahrer zusätzlich zu der Wahl des Ausfahrtbereichs auch bei der Entscheidung bzgl. der Fahrtrichtung unterstützt werden kann.

Insbesondere ist es vorgesehen, dass ein den Ausfahrtbereich beschreibendes Signal akustisch und/oder visuell und/oder haptisch ausgegeben wird. Das akustische Signal kann beispielsweise über einen Lautsprecher des Kraftfahrzeugs ausgegeben werden, das visuelle Signal kann beispielsweise über ein Display des Kraftfahrzeugs ausgegeben werden und das haptische Signal kann beispielsweise über einen entsprechenden Aktor im Lenkrad des Kraftfahrzeugs an den Fahrer ausgegeben werden. Somit kann der Fahrer auf unterschiedliche Weise beim Ausparken unterstützt werden.

Vorzugsweise wird das Kraftfahrzeug abhängig von dem bestimmten Ausfahrtbereich zumindest semi-autonom manövriert Das semi-autonome Manövrieren kann beispielsweise einen automatischen Lenkeingriff umfassen. In diesem Fall kann der Fahrer das Gaspedal und/oder die Bremse selbst betätigen. Ergänzend oder alternativ kann das semi-autonome Manövrieren allerdings auch ein automatisches Beschleunigen und/oder Verzögern umfassen. Vorteilhaft ist wiederum eine hierdurch vorliegende besonders komfortable Unterstützung des Fahrers beim Ausparken.

In einer weiteren Ausführungsform wird das Begrenzungselement zusätzlich mit einem Ultraschallsensor und/oder einem Radarsensor und/oder einem Lidarsensor und/oder einem Laserscanner ermittelt. Der Ultraschallsensor und/oder der Radarsensor und/oder der Lidarsensor und/oder der Laserscanner können den Abstand und/oder das Vorhandensein des dreidimensionalen Objekts bestimmen, jedoch sind bei diesen Sensoren auch bildgebende Verfahren möglich. Das bildgebende Verfahren bei dem Radarsensor und/oder dem Lidarsensor und/oder dem Laserscanner basiert häufig darauf, dass Oberflächen von Objekten unterschiedlich stark reflektieren. Es kann somit ein Bild erzeugt werden, welches Auskunft darüber gibt, wie stark eine zuvor durch einen der Sensoren ausgesandte elektromagnetische Welle reflektiert wird. Vorteilhaft an den weiteren Sensoren ist also eine zusätzliche und/oder genauere Erfassung des Umgebungsbereichs und somit eine Möglichkeit zur präziseren Ermittlung des Begrenzungselements und zur präziseren Bestimmung des Ausfahrtbereichs.

Ein erfindungsgemäßes Fahrerassistenzsystem umfasst eine Kamera zum Bereitstellen eines Bildes von einem Umgebungsbereich des Kraftfahrzeugs und ist dazu ausgelegt, ein erfindungsgemäßes Verfahren durchzuführen.

Ein erfindungsgemäßes Kraftfahrzeug, insbesondere ein Personenkraftwagen, umfasst ein erfindungsgemäßes Fahrerassistenzsystem. Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Ausführungsbeispiele der Erfindung werden nachfolgend anhand schematischer Zeichnungen näher erläutert.

Dabei zeigen:
- Fig. 1: in schematischer Draufsicht ein Ausführungsbeispiel eines erfindungsgemäßen Kraftfahrzeugs, das sich auf einer Parkfläche zum Querparken befindet;
- Fig. 2: in schematischer Draufsicht das Kraftfahrzeug gemäß Fig. 1, wobei sich das Kraftfahrzeug auf einer Parkfläche zum Schrägparken befindet;
- Fig. 3: in schematischer Draufsicht das Kraftfahrzeug gemäß Fig. 1, wobei sich das Kraftfahrzeug auf einer Parkfläche zum Längsparken befindet;
- Fig. 4: in schematischer Draufsicht das Kraftfahrzeug gemäß Fig. 1, wobei sich das Kraftfahrzeug auf einer Parkfläche zum Längsparken befindet, die eine Parkflächenmarkierung mit einem kreuzförmigen Abschnitt aufweist;
- Fig. 5: in schematischer Draufsicht das Kraftfahrzeug analog zu Fig. 1, wobei sich das Kraftfahrzeug auf einer Parkfläche zum Längsparken befindet, die durch einen seitlichen Bordstein begrenzt ist;
- Fig. 6: in schematischer Draufsicht das Kraftfahrzeug gemäß Fig. 1, wobei sich das Kraftfahrzeug auf einer Parkfläche zum Schrägparken und Vorwärtseinparken befindet; und
- Fig. 7: in schematischer Draufsicht das Kraftfahrzeug gemäß Fig. 1, wobei sich das Kraftfahrzeug auf einer Parkfläche zum Schrägparken und Rückwärtseinparken befindet.

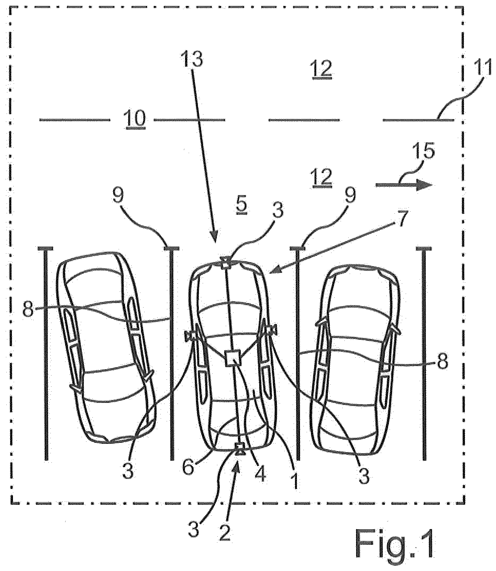

In Fig. 1 ist schematisch eine Draufsicht auf ein Kraftfahrzeug 1 mit einem Fahrerassistenzsystem 2 gemäß einer Ausführungsform der Erfindung dargestellt. Das Fahrerassistenzsystem 2 umfasst in dem vorliegenden Ausführungsbeispiel vier Kameras 3 und eine Auswerteeinrichtung 4. Die Anzahl der Kameras 3 kann grundsätzlich beliebig gewählt werden. Bevorzugt kann mit den Kameras 3 ein Umgebungsbereich 5 des Kraftfahrzeugs 1 vollständig erfasst werden und zumindest ein Bild bzw. eine Bildsequenz von dem Umgebungsbereich 5 bereitgestellt werden. Je mehr der Kameras 3 verwendet werden, desto einfacher lässt sich der Umgebungsbereich 5 erfassen. Weiterhin können durch eine hohe Anzahl der Kameras 3 auch redundante Bilder des Umgebungsbereichs 5 bereitgestellt werden und eine präzisere und/oder zuverlässigere Auswertung der Bilder wird ermöglicht.

In dem vorliegenden Ausführungsbeispiel sind die Kameras 3 so an dem Kraftfahrzeug 1 angeordnet, dass mit zwei der Kameras 3 jeweils ein Seitenbereich des Kraftfahrzeugs 1 erfasst werden kann. Diese Kameras 3 sind beispielsweise in den Seitenspiegeln des Kraftfahrzeugs 1 angeordnet. Eine Kamera 3 ist in einem Frontbereich des Kraftfahrzeugs 1 angeordnet und eine Kameras 3 ist in einem Heckbereich des Kraftfahrzeugs 1 angeordnet. Die Anordnung der Kameras 3 ist jedoch nur beispielhaft zu verstehen.

Die Kamera 3 kann eine CMOS Kamera oder aber eine CCD Kamera oder eine beliebige Bilderfassungseinrichtung sein, mit welcher das Bild des Umgebungsbereichs 5 bereitgestellt werden kann. In dem Fall von mehreren der Kameras 3 werden folglich auch mehrere Bilder bereitgestellt. Die Kamera 3 kann auch eine Videokamera sein, welche kontinuierlich eine Sequenz von Einzelbildern bereitstellt.

Die Auswerteeinrichtung dient zum Verarbeiten der Bilder, die mit den Kameras 3 erfasst werden. Die Auswerteeinrichtung 4 kann dazu ausgelegt sein, die Bilder mit einem entsprechenden Bildverarbeitungsprogramm zu bearbeiten. Die Auswerteeinrichtung 4 ist mit den Kameras 3 über eine Datenleitung 6 verbunden. Es kann aber auch sein, dass Daten der Kameras 3 per Funk zu der Auswerteeinrichtung 4 übertragen werden.

Das Kraftfahrzeug 1 befindet sich vorliegend auf einer Parkfläche 7, die zum Querparken ausgebildet ist. Eine derartige Parkfläche 7 kann auch als Querparkfläche bezeichnet werden. Die Parkfläche 7 ist mit Begrenzungselementen begrenzt. In dem hier gezeigten Ausführungsbeispiel ist die Parkfläche 7 mit einer Parkflächenmarkierung 8 begrenzt. Die Parkflächenmarkierung 8 ist auf die Oberfläche der Fahrbahn aufgebracht. Die Parkflächenmarkierung 8 ist eine Markierung, welche die Anordnung von Parkflächen und deren Abgrenzung vom fließenden Verkehr regelt. Linien der Parkflächenmarkierung 8 zeigen an, auf weiche Weise und auf welchen Flächen Kraftfahrzeuge abzustellen sind. Die Linien werden insbesondere auf die Fahrbahn aufgebracht und können sowohl durchgehend als auch unterbrochen dargestellt werden. Üblicherweise können durch die Linien die vier Ecken der Parkfläche erkannt werden. Die Breite der Linien kann beispielsweise 8 bis 12 cm betragen, es kann aber auch sein, dass die Breite nur 5 cm beträgt, andererseits kann es auch sein, dass die Breite 15 bis 20 cm beträgt, insbesondere wenn ein Parkflächenbelag der Parkfläche aus Pflastersteinen besteht. In seltenen Ausführungsformen beträgt die Breite der Linien sogar bis zu 50 cm.
Die Parkflächenmarkierung 8 wird üblicherweise in weißer Farbgebung aufgebracht, es gibt aber auch Ausnahmen, beispielsweise farbige Linien und/oder farbige Flächen der Parkflächenmarkierung 8 bzw. der Parkfläche.

An einem jeweiligen Enden der jeweiligen Parkflächenmarkierung 8 bilden die Linien einen T-förmiger Abschnitt 9. An die Parkfläche 7 grenzt eine Fahrbahn 10 mit einer Mittellinie 11 und zwei Fahrspuren 12. Neben dem Kraftfahrzeug 1 sind auf den benachbarten Parkflächen ebenfalls Kraftfahrzeuge abgestellt. Mit den Kameras 3 können Bilder bzw. Bildsequenzen des Umgebungsbereichs 5 erfasst werden. In den Bildern kann mittels der Auswerteeinrichtung 4 das Begrenzungselement bzw. die Parkflächenmarkierung 8 ermittelt werden. In dem vorliegenden Ausführungsbeispiel wird insbesondere zumindest ein T-förmiger Abschnitt 9 ermittelt. Das Ermitteln geschieht beispielsweise durch Vergleichen des T-förmigen Abschnitts 9 mit einem T-förmigen Referenzabschnitt. Dieser T-förmige Referenzabschnitt kann beispielsweise in einer Datenbank oder einer Speichereinheit der Auswerteeinrichtung 4 abgespeichert sein. Das Vergleichen des T-förmigen Referenzabschnittes mit dem T-förmigen Abschnitt 9 kann dann beispielsweise mit bekannten Verfahren wie einer Kreuzkorellation oder mit Transinformation erfolgen.

Grundsätzlich kann der Vergleich des zumindest einen ermittelten Begrenzungselements mit einem vorbestimmten Referenzbegrenzungselement mit verschiedenen Methoden erfolgen. So kann beispielsweise die Form des Begrenzungselements mit der Form des Referenzbegrenzungselements verglichen werden, was beispielsweise durch ein Matching, insbesondere eine Kreuzkorrelation, erfolgen kann. Es kann aber auch vorgesehen sein, dass von dem Begrenzungselement vorbestimmte Merkmale extrahiert werden, welche mit den gleichen vorbestimmten Merkmalen des Referenzbegrenzungselements verglichen werden. Diese Merkmale können beispielsweise Haar-Merkmale und/oder HoG-Merkmale und/oder Gabor-Merkmale sein. Ein Merkmalsraum welcher durch die Merkmale aufgespannt wird, kann dann beispielsweise mittels einem Verfahren des maschinellen Lernens, insbesondere einer Spielart des Boostings oder der Support Vector Machine, so unterteilt werden, dass das Begrenzungselement eindeutig einem Referenzbegrenzungselement bzw. einer Klasse des Referenzbegrenzungselements zugeordnet werden kann. Grundsätzlich sind sämtliche Objekterkennungs- bzw. Klassifikationsverfahren denkbar, welche das Begrenzungselement in eine vorbestimmte Klasse von Referenzbegrenzungselementen einteilen kann. Eine Klasse kann beispielsweise der T-förmige Abschnitt 9 der Parkflächenmarkierung sein.

Anhand des Vergleichs des ermittelten Begrenzungselements mit einem Referenzbegrenzungselement soll ein Ausfahrtbereich 13 der Parkfläche 8 ermittelt werden. Der Ausfahrtbereich 13 ist insbesondere die Seite der Parkfläche 8, welche vorschriftsgemäß oder bestimmungsgemäß für das Ausparken aus der Parkfläche vorgesehen ist.

Bei dem Ausführungsbeispiel von Fig. 1 wird berücksichtigt, dass die T-förmigen Abschnitte 9 in dem Bereich der Parkflächenmarkierung 8 angeordnet sind, in dem sich der Ausfahrtbereich 13 befindet. Insbesondere befindet sich der Ausfahrtbereich 13 zwischen zwei der T-förmigen Abschnitte 9. Anhand dieser Information und anhand der Bilder, die mit den Kameras 3 erfasst werden, kann der Ausfahrtbereich 13 mittels der Auswerteeinrichtung 4 bestimmt werden. Dabei wird insbesondere aus den Bildern der Kameras 3 und der Information welches Bild von welcher der Kameras 3 erfasst wird, die relative Lage des Kraftfahrzeugs 1 zu der Parkflächenmarkierung 8 bestimmt. Vorliegend befindet sich nun jeweils der T-förmige Abschnitt 9 vor dem Kraftfahrzeug 1. Es kann somit davon ausgegangen werden, dass die Parkfläche 7 durch Vorwärtsfahren verlassen werden kann. Ein Ausfahrtbereich 13 befindet sich somit in diesem Fall vor dem Kraftfahrzeug 1 bzw. an der Seite der Parkfläche 7 welche vor dem Kraftfahrzeug 1 liegt.

Der Ausfahrbereich 13 kann dem Fahrer des Kraftfahrzeugs 1 mit einem Signal angezeigt werden. Das Signal kann akustisch und/oder visuell und/oder haptisch ausgegeben werden. Der Fahrer kann somit beim Ausparken aus der Parkfläche unterstützt werden. Weiterhin kann es vorgesehen sein, dass abhängig von dem Ausfahrtbereich 13 das Kraftfahrzeug 1 zumindest semi-autonom manövriert wird. Das bedeutet, der Fahrer bekommt Unterstützung bei dem Manövrieren des Kraftfahrzeugs 1. Es kann beispielsweise vorgesehen sein, dass ein Lenkeingriff in eine Lenkung des Kraftfahrzeugs 1 durch das Fahrerassistenzsystem 2 erfolgt. Weiterhin kann auch ein Beschleunigen und/oder Verzögern des Kraftfahrzeugs 1 abhängig von dem Ausfahrtbereich 13 mit dem Fahrerassistenzsystem 2 durchgeführt werden. So ist es beispielsweise auch möglich, einen Bereich zu definieren, der kritisch ist, weil dort die Fahrbahn 10 beginnt und andere Kraftfahrzeuge zu erwarten sind.

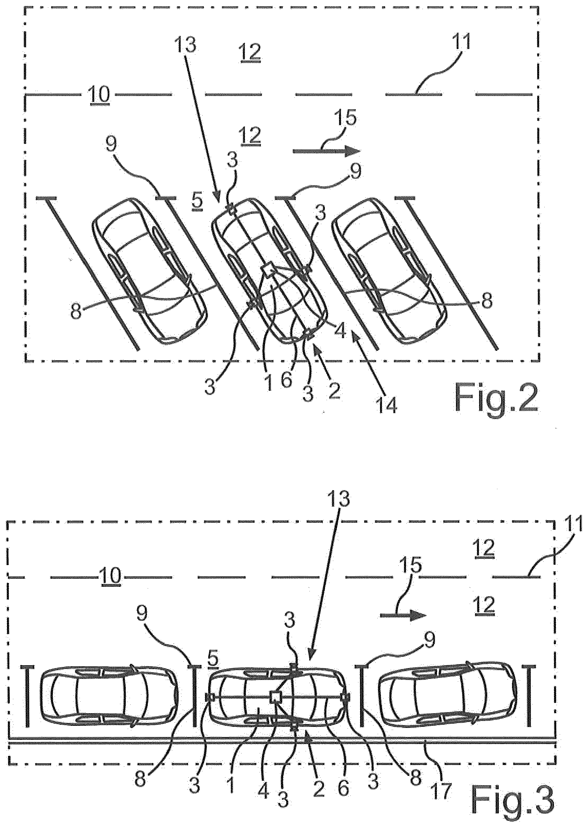

Fig. 2 zeigt das Kraftfahrzeug 1 auf einer Parkfläche 14, die zum Schrägparken vorgesehen ist. Auch die Parkfläche 14 wird von der Parkflächenmarkierung 8 begrenzt, die T-förmige Abschnitte 9 aufweist. Hier weisen die beiden Linien der Parkflächenmarkierung 8, die den T-förmigen Abschnitt 9 bilden keinen 90°-Winkel zueinander auf. Wie zuvor im Zusammenhang mit dem Ausführungsbeispiel gemäß Fig. 1 erläutert, kann anhand dieser T-förmigen Abschnitte 9 der Ausfahrtbereich 13 der Parkfläche 14 bestimmt werden.

Fig. 3 zeigt das Kraftfahrzeug 1 auf einer Parkfläche 16, welche zum Längsparken vorgesehen ist. Eine solche Parkfläche kann auch als Längsparkfläche bezeichnet werden. Das Kraftfahrzeug 1 ist auf der Parkfläche 16 in einer Längsaufstellung abgestellt. Üblicherweise erreicht das Kraftfahrzeug die Längsparkfläche 16 direkt von der Fahrbahn 10 und kann rückwärts oder, soweit ausreichend Platz vorhanden, vorwärts in die Parkfläche 16 einparken.

Abhängig von dem erfassten T-förmigen Abschnitt 9 der Parkflächenmarkierung 8 der Längsparkfläche 16, kann nun ebenfalls der Ausfahrtbereich 13 bestimmt werden. Der Ausfahrtbereich 13 liegt in diesem Fall auf der Seite des Kraftfahrzeugs 1, bzgl. der Längsachse des Kraftfahrzeugs 1, auf welcher sich der T-förmige Abschnitt 9 befindet. Ergänzend oder alternativ kann ein Bordstein 17 vorhanden sein, der die Parkfläche 16 begrenzt. Auch der Bordstein 17 kann als Begrenzungselement erfasst werden und zur Bestimmung des Ausfahrtbereichs 13 verwendet werden. Hierbei kann davon ausgegangen werden, dass der Ausfahrtbereich 13 auf der gegenüberliegenden Seite des Bordsteins 17 angeordnet ist.

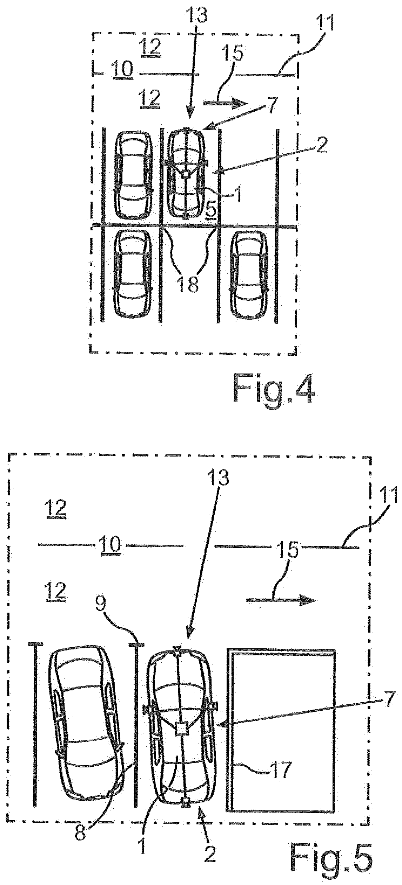

Fig. 4 zeigt das Kraftfahrzeug 1 auf der Parkfläche 7, welche zum Längsparken vorgesehen ist. Die Parkfläche 7 ist an drei Seiten von weiteren Parkflächen begrenzt. Diese Situation führt dazu, dass die Linien der Parkflächenmarkierung 8 kreuzförmige Abschnitte 18 aufweisen. Anhand zumindest eines kreuzförmigen Abschnitts 18 kann nun der Ausfahrtbereich 13 bestimmt werden. Es wird davon ausgegangen, dass der kreuzförmige Abschnitt 18 nur dann auftritt, wenn die Parkfläche 7 seitlich und auf einer vorderen oder hinteren Seite durch weitere benachbarte Parkflächen begrenzt ist. Somit liegt der Ausfahrtbereich 13 üblicherweise auf der gegenüberliegenden Seite des oder der kreuzförmigen Abschnitte 18. Befindet sich also ein kreuzförmiger Abschnitt 18 vor dem Kraftfahrzeug 1, so befindet sich der Ausfahrtbereich 13 üblicherweise hinter dem Kraftfahrzeug 1. Liegt der kreuzförmige Abschnitt 18 hinter dem Kraftfahrzeug 1, so ist davon auszugehen, dass der Ausfahrtbereich 13 vor dem Kraftfahrzeug 1 liegt.

Fig. 5 zeigt das Kraftfahrzeug 1 auf der Parkfläche 7, welche zum Längsparken vorgesehen ist. Die Parkfläche 7 ist vorliegend auf einer Seite mit der Parkflächenmarkierung 8 und auf der anderen Seite mit dem Bordstein 17 begrenzt. Durch die Erfassung der Parkflächenmarkierung 8 und/oder des Bordsteins 17 kann noch keine eindeutige Entscheidung über den Ausfahrtbereich 13 getroffen werden. Erst durch die Erfassung des T-förmigen Abschnitts 9 der Parkflächenmarkierung 8 kann bestimmt werden, dass der Ausfahrtbereich 13 auf der Seite des T-förmigen Abschnitts 9, in diesem Fall also in Vorwärtsfahrtrichtung des Kraftfahrzeugs 1, liegt.

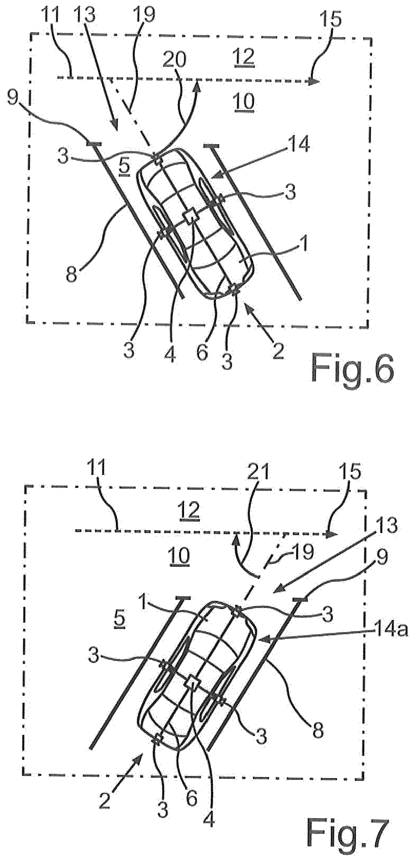

In den Fig. 6 und 7 sind zwei unterschiedliche Varianten von Parkflächen 14, 14a zum Schrägparken gezeigt. Bei den Parkflächen 14, 14a zum Schrägparken kann der Aufstellwinkel des Kraftfahrzeugs 1 zu einer Fahrspur 12 einer an die Parkfläche 14, 14a angrenzenden Fahrbahn 10 in einem Bereich zwischen 45° und 89°, insbesondere zwischen 45° und 80°, liegen. Zusätzlich zu dem Ausfahrtbereich 13 kann auch eine Fahrtrichtung 15 der an die jeweilige Parkfläche 14, 14a angrenzenden Fahrspur 12 bestimmt werden.

Wie bereits im Zusammenhang mit Fig. 2 erläutert, zeigt Fig. 6 das Kraftfahrzeug 1 auf der Parkfläche 14, welche zum Schrägparken und Vorwärtseinparken vorgesehen ist. Das Kraftfahrzeug 1 wird zum Einparken vorwärts in die Parkfläche 14 bewegt. Zum Ausparken wird das Kraftfahrzeug 1 rückwärts von der Parkfläche 14 weg bewegt. Eine verlängerte Längsachse 19 des Kraftfahrzeugs 1 schließt mit der Mittellinie 11 einen ersten Winkel 20 ein, welcher im Gegenuhrzeigersinn von der verlängerten Längsachse 19 zu der Mittellinie 11 hin gemessen wird. Der erste Winkel 20 ist kleiner als 90°. Anhand des ersten Winkels 20 kann die Fahrtrichtung 15 auf der Fahrbahn 10 bestimmt werden. Wenn das Kraftfahrzeug 1 von der Parkfläche 14 weg bewegt wird, kann das Kraftfahrzeug 1 derart manövriert werden, dass das Kraftfahrzeug 1 beim Rückwärtsausparken quasi um diesen ersten Winkel 20 gedreht wird. Somit kann das Kraftfahrzeug 1 anschließend entlang der Fahrtrichtung 15 der Fahrspur 12 weiter bewegt werden. Auch bei der Parkfläche zum Schrägparken und Vorwärtseinparken ist der Ausfahrtbereich 13 auf der Seite des T-förmigen Abschnitts 9 angeordnet.

Fig. 7 zeigt das Kraftfahrzeug 1 auf einer Parkfläche 14a, welche zum Schrägparken und Rückwärtseinparken vorgesehen ist. Das Kraftfahrzeug 1 wird zum Einparken rückwärts in die Parkfläche 14a bewegt. Zum Ausparken wird das Kraftfahrzeug 1 vorwärts von der Parkfläche 14a weg bewegt. Die verlängerte Längsachse 19 des Kraftfahrzeugs 1 schließt mit der Mittellinie 11 einen zweiten Winkel 21 ein, welcher im Uhrzeigersinn von der verlängerten Längsachse 19 zu der Mittellinie 11 gemessen wird. Der zweite Winkel 21 ist kleiner als 90°. Auch hier kann das Kraftfahrzeug 1 beim Wegbewegen von der Parkfläche 14a derart manövriert werden, dass das Kraftfahrzeug 1 beim Vorwärtsausparken quasi um den zweiten Winkel 21 gedreht wird und anschließend entlang der Fahrtrichtung 15 auf der Fahrspur 12 bewegt wird. Auch bei dieser Parkfläche 14a ist der Ausfahrtbereich 13 auf der Seite des T-förmigen Abschnitts 9 angeordnet.

Für den Fall, dass mehrere der Begrenzungselemente ermittelt werden, wie beispielsweise der T-förmige Abschnitt 9, der Bordstein 17 und/oder der kreuzförmige Abschnitt 18, so wird je nach Situation der wahrscheinlichste Ausfahrtbereich 13 bestimmt. Der wahrscheinlichste Ausfahrtbereich 13 kann sich beispielsweise mit Regeln eines Bay'schen Netzwerks oder eines Hidden-Markov-Fields bestimmen lassen, indem weitere Parameter, welche eine Wahrscheinlichkeit für das Auftreten des jeweiligen Begrenzungselements angeben, bereitgestellt werden.

Es kann somit aufgrund von mehreren der Begrenzungselemente eine zuverlässigere Aussage über die Position des Ausfahrtbereichs 13 getroffen werden. Weiterhin können durch das redundante Vorliegen von mehreren Begrenzungselementen auch Fehler in der Ermittlung dieser erkannt und/oder korrigiert werden. Weiterhin kann beispielsweise die Mittellinie 11 der Fahrtrichtung 15 erfasst werden. So kann beispielsweise angenommen werden, dass bei Vorhandensein der Mittellinie 11 die Fahrbahn 10 zumindest zwei der Fahrspuren 12 umfasst. Ergänzend oder alternativ kann aber auch anhand der Mittellinie 11 der Ausfahrtbereich 13 ermittelt werden.

## Patentansprüche

1. Verfahren zum Unterstützen eines Fahrers eines Kraftfahrzeugs (1) beim Ausparken aus einer Parkfläche (7 ,14, 16) mit den Schritten:
- Bereitstellen zumindest eines Bildes von einem Umgebungsbereich (5) des Kraftfahrzeugs (1) mittels einer Kamera (3) des Kraftfahrzeugs (1) und
- Ermitteln zumindest eines die Parkfläche (7, 14, 16) begrenzenden Begrenzungselements (8, 9, 17, 18) anhand des Bildes mittels einer Auswerteeinrichtung (4) des Kraftfahrzeugs (1),
- Vergleichen des zumindest einen ermittelten Begrenzungselements (8, 9, 17, 18) mit einem vorbestimmten Referenzbegrenzungselement mittels der Auswerteeinrichtung (4) und
- Bestimmen eines zum Ausfahren des Kraftfahrzeugs (1) aus der Parkfläche (7, 14, 16) vorgesehenen Ausfahrtbereichs (13) der Parkfläche (7, 14, 16) anhand des Vergleichs mittels der Auswerteeinrichtung (4),
**dadurch gekennzeichnet, dass** als das Begrenzungselement (8, 9, 17, 18) zumindest ein Bereich einer Parkflächenmarkierung (8) ermittelt wird und eine Form der Parkflächenmarkierung (8) ermittelt wird und der Ausfahrtbereich (13) abhängig von der Form der Parkflächenmarkierung (8) bestimmt wird,
wobei als das Begrenzungselement (8, 9, 17, 18) ein T-förmiger Abschnitt (9) der Parkflächenmarkierung (8) oder ein kreuzförmiger Abschnitt (18) der Parkflächenmarkierung (8) ermittelt wird,
der Ausfahrtbereich (13) auf einer dem ermittelten T-förmigen Abschnitt (9) zugeordneten Seite der Parkfläche (7, 14, 16) bestimmt wird,
oder wobei als das Begrenzungselement (8, 9, 17, 18) ein kreuzförmiger Abschnitt (18) der Parkflächenmarkierung (8) ermittelt wird, der Ausfahrtbereich (13) auf einer dem ermittelten kreuzförmigen Abschnitt (18) gegenüberliegenden Seite der Parkfläche (7, 14, 16) bestimmt wird.

2. Verfahren nach Anspruch 1,
**dadurch gekennzeichnet, dass**
die Parkfläche (7,14,16) eine Schrägparkfläche (14, 14a) ist und abhängig von dem ermittelten T-förmigen Abschnitt (9) eine Fahrtrichtung (15) einer an den Ausfahrtbereich (13) angrenzenden Fahrspur (12) bestimmt wird.

3. Verfahren nach einem der vorhergehenden Ansprüche,
**dadurch gekennzeichnet, dass**
eine Mittellinie (11) einer Fahrbahn (10) ermittelt wird und abhängig von der erfassten Mittellinie (11) eine Fahrtrichtung (15) einer an den Ausfahrtbereich (13) angrenzenden Fahrspur (12) der Fahrbahn (10) bestimmt wird.

4. Verfahren nach einem der vorhergehenden Ansprüche,
**dadurch gekennzeichnet, dass**
ein den Ausfahrtbereich (13) beschreibendes Signal akustisch und/oder visuell und/oder haptisch ausgegeben wird.

5. Verfahren nach einem der vorhergehenden Ansprüche,
**dadurch gekennzeichnet, dass**
das Kraftfahrzeug (1) abhängig von dem bestimmten Ausfahrtbereich (13) zumindest semi-autonom manövriert wird.

6. Verfahren nach einem der vorhergehenden Ansprüche,
**dadurch gekennzeichnet, dass**
das Begrenzungselement (8, 9, 17, 18) zusätzlich mit einem Ultraschallsensor und/oder einem Radarsensor und/oder einem Lidarsensor und/oder einem Laserscanner ermittelt wird.

7. Fahrerassistenzsystem (2) mit einer Kamera (3) zum Bereitstellen eines Bildes von einem Umgebungsbereich (5) des Kraftfahrzeuges (1), welches dazu ausgelegt ist, ein Verfahren nach einem der vorhergehenden Ansprüche durchzuführen.

8. Kraftfahrzeug (1) mit einem Fahrerassistenzsystem (2) nach Anspruch 7.

## Claims

1. Method for assisting a driver of a motor vehicle (1) when driving out of a parking space (7, 14, 16), comprising:
- making available at least one image of a surrounding area (5) of the motor vehicle (1) by means of a camera (3) of the motor vehicle (1), and
- detecting at least one boundary element (8, 9, 17, 18), bounding the parking space (7, 14, 16), on the basis of the image by means of an evaluation device (4) of the motor vehicle (1),
- comparing the at least one detected boundary element (8, 9, 17, 18) with a predetermined reference boundary element by means of the evaluation device (4) and
- determining an exit area (13) of the parking space (7, 14, 16), provided for driving the motor vehicle (1) out of the parking space (7, 14, 16), on the basis of the comparison by means of the evaluation device (4),
**characterized in that**
at least one area of a parking space marking (8) is detected as the boundary element (8, 9, 17, 18), and a shape of the parking space marking (8) is detected, and the exit area (13) is determined as a function of the shape of the parking space marking (8),
wherein
a T-shaped section (9) of the parking space marking (8) or a cross-shaped section (18) of the parking space marking (8) is detected as the boundary element (8, 9, 17, 18),
the exit area (13) is determined on a side of the parking space (7, 14, 16) which is assigned to the detected T-shaped section (9), or wherein a cross-shaped section (18) of the parking space marking (8) is detected as the boundary element (8, 9, 17, 18), and the exit area (13) is determined on a side of the parking space (7, 14, 16) lying opposite the detected cross-shaped section (18).

2. Method according to Claim 1,
**characterized in that**
the parking space (7, 14, 16) is a diagonal parking space (14, 14a), and a direction of travel (15) of a lane (12) which adjoins the exit area (13) is determined as a function of the detected T-shaped section (9).

3. Method according to one of the preceding claims,
**characterized in that**
a centre line (11) of a roadway (10) is detected, and a direction of travel (15) of a lane (12), adjoining the exit area (13), of the roadway (10) is determined as a function of the sensed centre line (11).

4. Method according to one of the preceding claims,
**characterized in that**
a signal which describes the exit area (13) is output acoustically and/or visually and/or haptically.

5. Method according to one of the preceding claims,
**characterized in that**
the motor vehicle (1) is manoeuvred at least semi-autonomously as a function of the determined exit area (13).

6. Method according to one of the preceding claims,
**characterized in that**
the boundary element (8, 9, 17, 18) is additionally detected with an ultrasonic sensor and/or a radar sensor and/or a lidar sensor and/or a laser scanner.

7. Driver assistant system (2) having a camera (3) for making available an image of a surrounding area (5) of the motor vehicle (1), which driver assistant system (2) is configured to carry out a method according to one of the preceding claims.

8. Motor vehicle (1) having a driver assistant system (2) according to Claim 7.

## Revendications

1. Procédé d'assistance d'un conducteur d'un véhicule automobile (1) lors de la sortie de stationnement depuis une aire de stationnement (7, 14, 16), comprenant les étapes suivantes :
- fourniture d'au moins une image d'une zone environnante (5) du véhicule automobile (1) au moyen d'une caméra (3) du véhicule automobile (1) et
- détermination d'au moins un élément de délimitation (8, 9, 17, 18) qui délimite l'aire de stationnement (7, 14, 16) à l'aide de l'image au moyen d'un dispositif d'interprétation (4) du véhicule automobile (1),
- comparaison de l'au moins un élément de délimitation (8, 9, 17, 18) déterminé avec un élément de délimitation de référence prédéfini au moyen du dispositif d'interprétation (4) et
- définition d'une zone de sortie (13) de l'aire de stationnement (7, 14, 16) prévue pour la sortie du véhicule automobile (1) hors de l'aire de stationnement (7, 14, 16) à l'aide de la comparaison au moyen du dispositif d'interprétation (4),
**caractérisé en ce que**
au moins un marquage d'aire de stationnement (8) est déterminé en tant qu'élément de délimitation (8, 9, 17, 18) et
une forme du marquage d'aire de stationnement (8) est déterminée et la zone de sortie (13) est définie en fonction de la forme du marquage d'aire de stationnement (8),
une portion en forme de T (9) du marquage d'aire de stationnement (8) ou une portion en forme de croix (18) du marquage d'aire de stationnement (8) étant déterminée en tant que l'élément de délimitation (8, 9, 17, 18),
la zone de sortie (13) étant déterminée sur un côté de l'aire de stationnement (7, 14, 16) associé à la portion en forme de T (9) déterminée,
ou une portion en forme de croix (18) du marquage d'aire de stationnement (8) étant déterminée en tant que l'élément de délimitation (8, 9, 17, 18), la zone de sortie (13) étant définie sur un côté de l'aire de stationnement (7, 14, 16) à l'opposé de la portion en forme de croix (18) déterminée.

2. Procédé selon la revendication 1, **caractérisé en ce que** l'aire de stationnement (7, 14, 16) est une aire de stationnement en épi (14, 14a) et un sens de circulation (15) d'une voie de circulation (12) adjacente à la zone de sortie (13) est défini en fonction de la portion en forme de T (9) déterminée.

3. Procédé selon l'une des revendications précédentes, **caractérisé en ce qu'**une ligne centrale (11) d'une chaussée (10) est déterminée et un sens de circulation (15) d'une voie de circulation (12) de la chaussée (10) adjacente à la zone de sortie (13) est défini en fonction de la ligne centrale (11) détectée.

4. Procédé selon l'une des revendications précédentes, **caractérisé en ce qu'**un signal décrivant la zone de sortie (13) est délivré de manière sonore et/ou visuelle et/ou haptique.

5. Procédé selon l'une des revendications précédentes, **caractérisé en ce que** le véhicule automobile (1) est manoeuvré de manière au moins semi-autonome en fonction de la zone de sortie (13) définie.

6. Procédé selon l'une des revendications précédentes, **caractérisé en ce que** l'élément de délimitation (8, 9, 17, 18) est en plus déterminé avec un capteur à ultrasons et/ou un capteur radar et/ou un capteur lidar et/ou un système de balayage à laser.

7. Système d'assistance au conducteur (2) comprenant une caméra (3) destinée à fournir une image d'une zone environnante (5) du véhicule automobile (1), lequel est conçu pour mettre en oeuvre un procédé selon l'une des revendications précédentes.

8. Véhicule automobile (1) équipé d'un système d'assistance au conducteur (2) selon la revendication 7.
